Europäisches Patentamt

European Patent Office

Office européen des brevets

(19)

(11) **EP 1 029 226 B1**

(12) **FASCICULE DE BREVET EUROPEEN**

(45) Date de publication et mention
de la délivrance du brevet:
**17.08.2005 Bulletin 2005/33**

(21) Numéro de dépôt: **98950182.0**

(22) Date de dépôt: **23.10.1998**

(51) Int Cl.⁷: **G01L 3/10**

(86) Numéro de dépôt international:
**PCT/FR1998/002269**

(87) Numéro de publication internationale:
**WO 1999/024805 (20.05.1999 Gazette 1999/20)**

(54) **DISPOSITIF DE MESURE D'UN COUPLE DE TORSION SUR UN ELEMENT MECANIQUE**

VORRICHTUNG ZUR MESSUNG EINES DREHMOMENTS AUF EINEM MECHANISCHEN ELEMENT

DEVICE FOR MEASURING TORQUE ON A MECHANICAL ELEMENT

(84) Etats contractants désignés:
**DE ES GB IT**

(30) Priorité: **07.11.1997 FR 9714019**

(43) Date de publication de la demande:
**23.08.2000 Bulletin 2000/34**

(73) Titulaire: **SNR ROULEMENTS**
**74010 Annecy Cédex (FR)**

(72) Inventeur: **NICOT, Christophe**
**F-74330 Epagny (FR)**

(74) Mandataire: **Srour, Elie**
**Renault,**
**Technocentre,**
**S.0267 - TCR AVA 0-56,**
**1, avenue du Golf**
**78288 Guyancourt (FR)**

(56) Documents cités:
**FR-A- 2 643 452      FR-A- 2 692 986**
**FR-A- 2 716 002      FR-A- 2 738 339**
**US-A- 4 503 713      US-A- 4 589 290**

• **PATENT ABSTRACTS OF JAPAN vol. 096, no.**
**009, 30 septembre 1996 & JP 08 121585 A**
**(NIPPON SOKEN INC;TOYOTA MOTOR CORP),**
**14 mai 1996**

# Description

L'invention concerne un dispositif de mesure de couple de torsion sur un élément mécanique.

L'invention concerne plus particulièrement un dispositif de mesure de couple de torsion du type décrit par exemple dans la publication FR-2692986. Ce dispositif comprend deux générateurs de champ magnétique, solidaires d'un premier support et situés dans le plan d'une section droite d'un arbre et deux dispositifs détecteurs de champ magnétique, solidaires d'un second support et immobilisés dans le plan d'une autre section droite de l'arbre, lesdits organes détecteurs délivrant un signal proportionnel au couple de torsion par suite du décalage angulaire relatif des générateurs de champ par rapport aux organes détecteurs.

Un tel dispositif peut être monté directement sur tout type d'élément mécanique, toutefois sa précision de mesure, en particulier pour de faibles décalages angulaires des détecteurs par rapport aux générateurs, dépend en grande partie de la précision de positionnement initial du détecteur de champ magnétique face à la transition magnétique située à la jonction des deux aimants constituant un générateur de champ magnétique. En effet, si le détecteur est décalé par rapport à la transition magnétique alors qu'aucun couple n'est appliqué à l'élément mécanique, celui-ci génère un signal non nul, dont la valeur varie avec la température, qui vient perturber la mesure du couple de torsion.

Il est connu pour remédier à cet inconvénient d'améliorer la précision de positionnement des détecteurs en réduisant les tolérances sur la précision de réalisation des pièces et du montage, mais cette réduction des tolérances s'accompagne d'une forte augmentation du coût de réalisation du dispositif. Une autre solution consiste à corriger le signal émis par chaque détecteur au moyen d'un circuit électronique adapté de manière à annuler électroniquement le signal de base émis par chaque détecteur lorsqu'aucun couple de torsion n'est appliqué à l'élément mécanique. Toutefois, cette solution entraîne la réalisation d'un dispositif complexe dont le coût est peu adapté aux applications les plus simples.

Enfin, les documents FR-2716002, US-4503713 et FR-2643452 décrivent chacun un dispositif de mesure de couple de torsion dans lequel chaque logement de réception pour un élément capteur présente une forme apte à autoriser un ajustement par rotation du capteur avant son immobilisation dans le logement.

Le but de la présente invention est donc de proposer un dispositif de mesure d'un couple de torsion offrant une excellente précision de mesure en permettant le réglage initial de la position des capteurs et qui soit simple et économique à réaliser.

Le dispositif selon l'invention est défini dans la revendication indépendante 1. Les modes particuliers de réalisation de l'invention sont définis dans les revendications dépendantes 2-7.

A cet effet, l'invention concerne un dispositif de mesure d'un couple de torsion sur un élément mécanique comprenant deux générateurs de champ magnétique fixés dans un premier plan de l'élément mécanique et deux organes détecteurs du champ magnétique disposés dans un second plan parallèle au premier et fixés sur un support, le second plan étant décalé par rapport au premier plan.

Selon l'invention, le dispositif est caractérisé en ce que le support comporte deux logements de réception usinés en regard des générateurs de champ magnétique et destinés à recevoir un élément capteur sur lequel est fixé un organe détecteur de champ magnétique, la forme des logements de réception étant adaptée pour autoriser le mouvement des éléments capteurs de manière à permettre le réglage de la position initiale de l'élément sensible de chaque organe détecteur de champ magnétique sur le support, les éléments capteurs étant ensuite immobilisés dans les logements de réception par des moyens d'arrêt.

Selon une autre caractéristique de l'invention l'élément capteur supporte également un circuit d'alimentation et de traitement du signal.

Selon une autre caractéristique de l'invention, les moyens d'arrêt sont constitués par le collage des éléments capteurs après le réglage de la position initiale de l'élément sensible des organes détecteurs.

Selon une autre caractéristique de l'invention, les générateurs de champ magnétique sont constitués par l'aboutement de deux aimants parallélépipèdiques possédant des vecteurs d'induction respectifs de sens opposés.

Selon une autre caractéristique de l'invention, les logements de réception sont formés par des logements cylindriques adaptés pour recevoir un élément capteur constitué d'un plot, ce dernier présentant un corps adapté pour tourner librement à l'intérieur du logement cylindrique et comportant un organe détecteur dont l'élément sensible est excentré par rapport au centre du logement cylindrique.

Cette caractéristique permet par une simple rotation du plot circulaire, le réglage de la position initiale de l'élément sensible.

Selon une autre caractéristique de l'invention, les plots comportent une butée limitant leur déplacement axial à l'intérieur des logements cylindriques.

Cette caractéristique permet d'imposer la valeur de l'entrefer entre les générateurs de champ magnétique et les organes détecteurs.

Selon une autre caractéristique de l'invention, l'élément mécanique est un arbre tournant et les deux générateurs de champ magnétique sont disposés symétriquement par rapport audit arbre.

D'autres caractéristiques et avantages apparaitrout à la lecture de la description d'un exemple de dispositif selon l'invention, en référence aux dessins dans lesquels :

- la figure 1 est une vue en perspective du dispositif selon l'invention,

- la figure 2 est une vue en perspective du dispositif avant montage des éléments capteurs,

- la figure 3 est une vue en perspective d'un élément capteur pris isolément.

- la figure 4 est une vue de côté de l'élément capteur représenté à la figure 3,

- la figure 5 est une vue partielle de côté d'un élément capteur et d'un générateur de champ magnétique lui faisant face lors de la phase initiale de réglage.

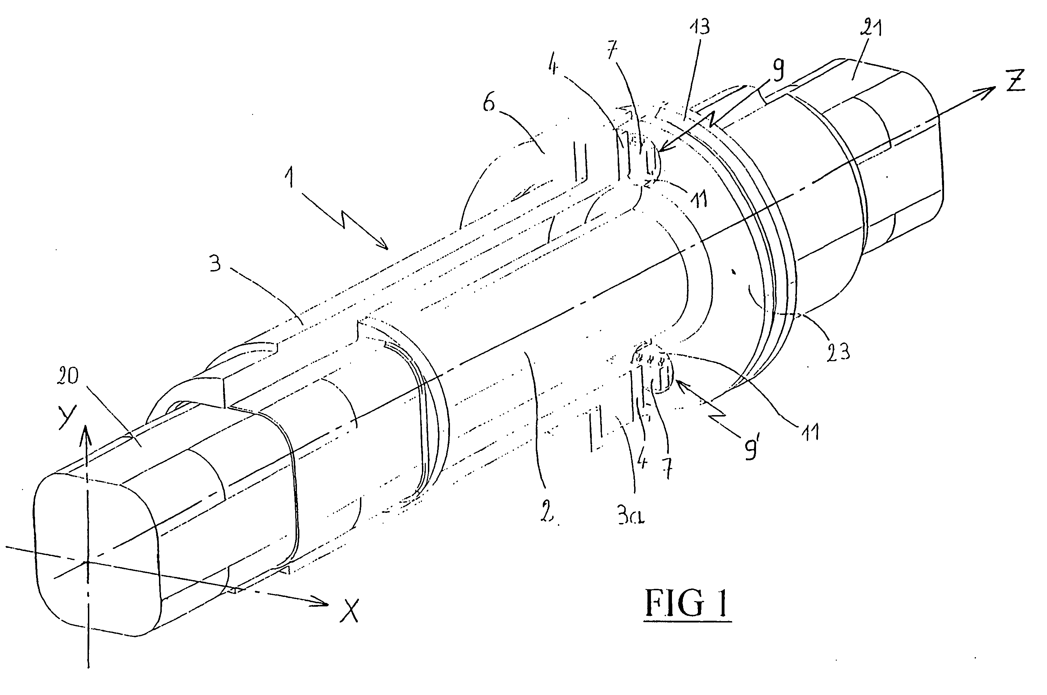

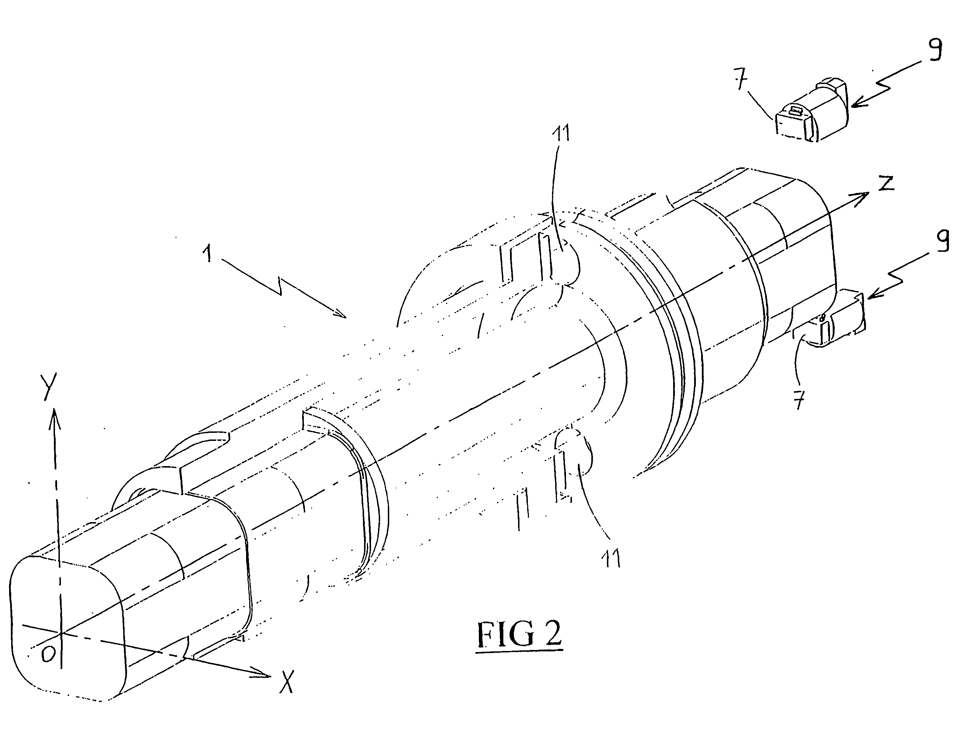

L'arbre 1 représenté sur les figures 1 et 2 est, selon un exemple de réalisation de l'invention, destiné à être intégré sur une colonne de direction de manière à réaliser la liaison entre la crémaillère et l'arbre de transmission (non représentés). A cet effet, il comporte en ses deux extrémités des zones d'accrochage 20,21 symbolisées par des emmanchements à section carrée. L'arbre 1 comporte également de manière connue en soi une zone 2 de diamètre réduit, qui permet de localiser axialement la déformation en torsion, et une piste de roulement intérieure 13 permettant d'intégrer un palier de roulement non représenté, tel que décrit dans FR-2750180.

La figure 1 représente l'arbre 1 équipé d'un dispositif de mesure du couple de torsion dont le fonctionnement est décrit dans la publication FR-2692986. Cet arbre 1, avantageusement réalisé en matériau ferromagnétique, comporte un collet 23 portant sur sa périphérie la piste roulement 13 et présentant sur ses bords latéraux deux trous 11 disposés symétriquement de part et d'autre de l'axe de l'arbre 1. L'arbre 1 porte également un élément codeur 3 constitué d'un corps sensiblement tubulaire présentant à une extrémité un alésage réduit à section carrée venant s'emmancher sur l'arbre 1, l'autre extrémité du corps se prolongeant radialement par une partie annulaire 3a, en matériau ferromagnétique, portant deux organes générateurs de champ magnétique 4 disposés symétriquement par rapport à l'axe de l'arbre 1 et venant en regard des trous 11 du collet 23. Un organe de canalisation 6, en matériau magnétique, est rapporté sur la partie annulaire 3a de l'élément codeur 3 de manière à canaliser les lignes de champ magnétique autour des générateurs 4.

Dans le mode de réalisation présenté, les générateurs de champ magnétique 4 sont réalisés par deux aimants parallélépipèdiques placés bout à bout et dont les vecteurs d'induction magnétique sont dirigés en sens contraire, cette disposition permettant un fort gradient du champ magnétique pour un déplacement dans la direction OX ainsi que cela est décrit dans la publication FR-2692986.

Un élément capteur 9 présentant un corps cylindrique 15. avantageusement réalisé en matériau ferromagnétique, est inséré axialement à travers les trous 11, ces derniers possédant un diamètre adapté pour permettre la libre rotation de l'élément capteur 9 suivant l'axe OZ.

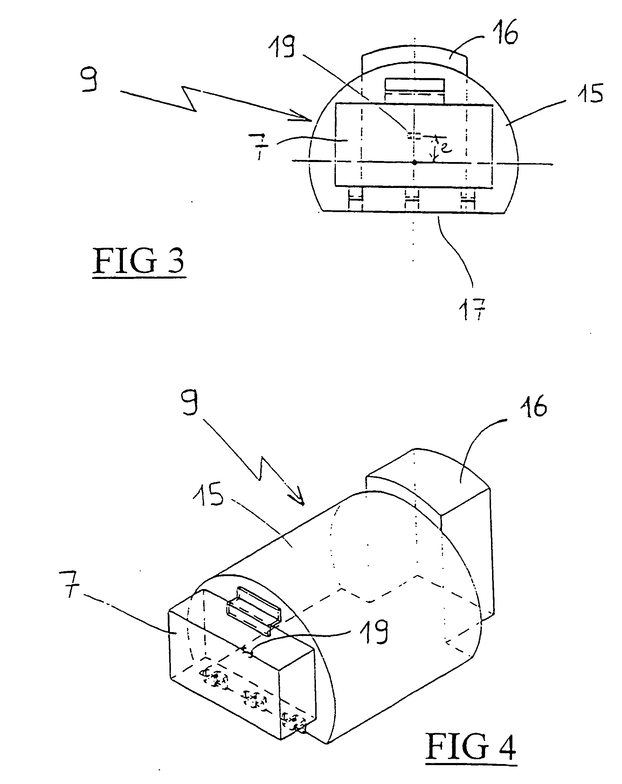

Cet élément capteur 9, représenté séparément sur les figures 3 et 4, comporte à une extrémité de son corps cylindrique 15 un détecteur magnétique 7 destiné à faire face au générateur de champ magnétique 4, l'autre extrémité comportant un appendice 16 limitant le mouvement axial de l'élément capteur 9 à l'intérieur des trous 11. Le détecteur magnétique 7 présente un élément sensible 19 qui est disposé de façon excentrée par rapport à la section circulaire de l'élément capteur 9 de manière à ce que la rotation de l'élément capteur 9 génère un déplacement suivant l'axe OX de l'élément sensible 19.

Le corps cylindrique 15 de l'élément capteur 9 présente également un méplat 17 libérant un espace par lequel un contact électrique entre le détecteur magnétique 7 et un circuit d'alimentation électrique peut être assuré, par exemple au moyen d'un connecteur coaxial.

Le fonctionnement du dispositif va maintenant être expliqué.

Lors de l'assemblage en usine des éléments constituant le dispositif, l'opérateur termine le montage par la mise en place des éléments capteurs 9 à l'intérieur des trous 11 et par la mesure du signal fourni par les deux éléments capteurs 9 à l'aide d'un appareil adapté. Ce signal étant fonction de la position de l'élément sensible 19 vis-à-vis de la transition magnétique, formée par l'aboutement des deux aimants parallélépipèdiques formant un générateur de champ 4. l'opérateur peut alors sensiblement annuler ce signal en tournant l'élément capteur 9 de manière à amener l'élément sensible 19 en regard de la transition magnétique du générateur de champ magnétique.

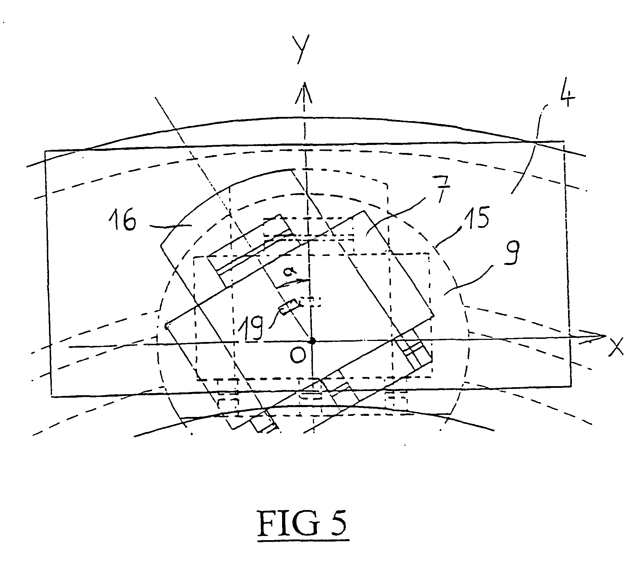

Cette opération de réglage initial de la position d'un élément capteur 9 est représentée figure 5 où l'on voit que l'élément sensible 19 étant excentré d'une distance " e " vis-à-vis du centre du corps cylindrique 15 de l'élément capteur 9, une rotation d'angle $\alpha$ de ce dernier entraîne un déplacement suivant OX de la position de l'élément sensible 19 d'une distance " d " telle que:

$$d= e*\sin(\alpha).$$

Il est ainsi aisé pour l'opérateur d'amener l'élément sensible 19 en regard de la transition magnétique en coordonnant la rotation de l'élément capteur 9 avec la lecture du signal émis par le détecteur magnétique 7, la plage de réglage offerte par la rotation de l'élément capteur 9 étant nettement supérieure aux dispersions de positionnement des organes générateurs de champ magnétique 4.

La puissance du signal fourni par chaque détecteur magnétique 7 peut également être modulée en modifiant la pénétration axiale de l'élément capteur 9 à travers les trous 11 de manière à modifier l'entrefer entre le détecteur magnétique 7 et l'organe générateur de champ magnétique 4 lui faisant face. Dans l'exemple représenté, cet entrefer est amené à une valeur constante en amenant en butée l'appendice 16 contre la paroi du collet 23 de manière à ce que la puissance du signal fourni par chaque détecteur soit équivalente.

Une fois ces réglages effectués, les éléments capteurs 9 sont immobilisés, par exemple au moyen d'une colle.

Bien entendu, l'invention n'est nullement limitée au mode de réalisation décrit et illustré qui n'a été donné qu'à titre d'exemple. En particulier, l'invention est applicable à tout type d'élément mécanique, tels qu'une poutre ou un cadre, sur lequel il est nécessaire d'intégrer un dispositif de mesure de couple de torsion.

**Revendications**

1. Ensemble mécanique (1) comprenant un dispositif de mesure d'un couple de torsion exercé sur cet ensemble, du type comportant une première surface d'appui (3a) qui est solidaire de l'ensemble mécanique (1) et sur laquelle deux générateurs (4) de champ magnétique sont fixés, du type comprenant une deuxième surface d'appui (23) qui est solidaire de l'ensemble mécanique (1), qui est parallèle et distincte de la première surface d'appui (3a) et qui présente deux logements de réception (11) dans chacun desquels est disposé un élément capteur (9) sur lequel est fixé un détecteur (7) de champ magnétique, de sorte qu'un générateur (4) et un détecteur (7) soient disposés l'un en face de l'autre au repos, et que le détecteur (7) délivre un signal proportionnel au couple de torsion par suite du décalage angulaire relatif du générateur (4) par rapport au détecteur (7) associé, ces logements de réception (11) présentant une forme apte à autoriser un ajustement par rotation, autour d'un premier axe sensiblement perpendiculaire respectivement à la première et à la deuxième surface d'appui, du détecteur (7) correspondant avant son immobilisation dans le logement (11) par des moyens d'arrêt, **caractérisé en ce que** le détecteur (7) de champ magnétique dont l'extrémité orientée vers le générateur (4) associé est munie d'un élément sensible (19) qui est excentré par rapport au premier axe, l'ajustement autorisé par rotation du détecteur (7) permettant alors un ajustement tangentiel de l'élément sensible (19).

2. Ensemble mécanique selon la revendication 1, **caractérisé en ce que** ledit élément capteur (9) supporte également un circuit d'alimentation et de traitement du signal.

3. Ensemble mécanique selon l'une quelconque des revendications 1 à 2, **caractérisé en ce que** lesdits moyens d'arrêt sont constitués par le collage des éléments capteurs (9) après le réglage de la position des éléments sensible (19) sur le support (23).

4. Ensemble mécanique selon l'une quelconque des revendications 1 à 3, **caractérisé en ce que** lesdits générateurs de champ magnétique (4) sont constitués par l'aboutement de deux aimants parallélépipèdiques possédant des vecteurs d'induction respectifs de sens opposés.

5. Ensemble mécanique selon l'une quelconque des revendications 1 à 4, **caractérisé en ce que** lesdits logements de réceptions (11) sont formés par des logements cylindriques adaptés pour recevoir un élément capteur (9) constitué d'un plot, ledit plot (9) présentant un corps (15) adapté pour tourner librement à l'intérieur du logement cylindrique (11) et comportant un organe détecteur (7) dont l'élément sensible (19) est excentré par rapport au centre du logement cylindrique (11).

6. Ensemble mécanique selon la revendication 5, **caractérisé en ce que** lesdits plots (9) comportent une butée (16) limitant le déplacement axial dudit plot (9) à l'intérieur des logements cylindriques (11).

7. Ensemble mécanique selon l'une quelconque des revendications 1 à 6, **caractérisé en ce que** les première (3a) et deuxième (23) surfaces d'appui sont deux surfaces circulaires coaxiales, les deux générateurs de champ magnétique (4) étant disposés sur la première surface d'appui (3a), de part et d'autre de l'axe commun à ces deux surfaces d'appui.

**Patentansprüche**

1. Mechanische Gesamtheit (1), welche eine Vorrichtung zum Messen eines Drehmoments umfasst, das auf diese Gesamtheit ausgeübt wird, von der Art, welche eine erste Abstützfläche (3a) umfasst, die fest mit der mechanischen Gesamtheit (1) verbunden ist, und auf welcher zwei Erzeuger (4) eines Magnetfelds befestigt sind, von der Art, welche eine zweite Abstützoberfläche (23) umfasst, welche fest mit der mechanischen Gesamtheit (1) verbunden ist, welche parallel und verschieden von der ersten Abstützoberfläche (3a) ist und welche zwei Sitzaufnahmen (11) aufweist, in welchen jeweils ein Sensorelement (9) angeordnet ist, an welchem ein Sensor (7) eines magnetischen Felds befestigt ist, derart, dass ein Erzeuger (4) und ein Sensor (7) in Ruhestellung zueinander gegenüberliegend angeordnet sind, und dass der Sensor (7) ein Signal, welches proportional zum Drehmoment ist, liefert, folgend aus der relativen, winkelbezogenen Verstellung des Erzeugers (4) im Verhältnis zum zugehörigen Sensor (7), wobei diese Sitzaufnahmen (11) eine Form aufweisen, die fähig ist, eine Einstellung durch Drehung um eine erste, im Wesentlichen rechtwinklige Achse jeweils zu der ersten und zu der zweiten Abstützoberfläche des entsprechenden Sensors (7) vor seiner Festsetzung in der Aufnahme (11) durch Sperrmittel zu erlauben, **dadurch gekennzeichnet, dass** der Sensor (7) des magnetischen Feldes, von dem das Ende, welches in Richtung zum zugehörigen Erzeuger (4) gerichtet ist, mit einem sensiblen Element (19) ausgestattet ist, welches im Verhältnis zur ersten Achse außer Mitte gesetzt ist, wobei die durch Drehung ermöglichte Einstellung des Sensors (7) somit eine tangentiale Einstellung des sensiblen Elements (19) ermöglicht.

2. Mechanische Gesamtheit nach Anspruch 1, **dadurch gekennzeichnet, dass** das Sensorelement (9) ebenso einen Schaltkreis einer Versorgung und einer Signalbehandlung trägt.

3. Mechanische Gesamtheit nach irgendeinem der Ansprüche 1 bis 2, **dadurch gekennzeichnet, dass** die Sperrmittel durch die Klebung der Sensorelemente (9) nach der Einstellung der Position der sensiblen Elemente (19) auf dem Träger (23) gebildet sind.

4. Mechanische Gesamtheit nach irgendeinem der Ansprüche 1 bis 3, **dadurch gekennzeichnet, dass** die Erzeuger eines Magnetfelds (4) durch Zusammenfügung von zwei parallel-epipedischen Magneten gebildet sind, welche jeweils Induktionsvektoren einer entgegengesetzten Richtung besitzen.

5. Mechanische Gesamtheit nach irgendeinem der Ansprüche 1 bis 4, **dadurch gekennzeichnet, dass** die Sitzaufnahmen (11) durch zylindrische Aufnahmen gebildet sind, welche zum Aufnehmen eines Sensorelements (9) angepasst sind, das aus einem Stopfen gebildet wird, wobei der Stopfen (9) einen Körper (15) aufweist, der angepasst ist, um frei im Inneren der zylindrischen Aufnahme (11) zu drehen, und welcher ein Sensorbauteil (7) aufweist, von dem das sensible Element (19) im Verhältnis zur Mitte der zylindrischen Aufnahme (11) außermittig ist.

6. Mechanische Gesamtheit nach Anspruch 5, **dadurch gekennzeichnet, dass** die Stopfen (9) einen Anschlag (16) umfassen, welcher die axiale Verstellung des Stopfens (9) im Inneren der zylindrischen Aufnahmen (11) begrenzt.

7. Mechanische Gesamtheit nach irgendeinem der Ansprüche 1 bis 6, **dadurch gekennzeichnet, dass** die ersten (3a) und zweiten (23) Abstützoberflächen zwei kreisförmige, koaxiale Oberflächen sind, wobei die zwei Erzeuger eines Magnetfelds (4) auf der ersten Abstützoberfläche (3a) beiderseits der Achse, welche diesen zwei Abstützoberflächen gemeinsam ist, angeordnet ist.

**Claims**

1. Mechanical assembly (1) comprising a device for measuring a torque which is applied to that assembly, of the type comprising a first support surface (3a) which is integral with the mechanical assembly (1) and on which two magnetic field generators (4) are fixed, of the type comprising a second support surface (23) which is integral with the mechanical assembly (1), which is parallel to and separate from the first support surface (3a) and which has two receiving seats (11), in each one of which is disposed a sensor element (9) on which is fixed a magnetic field detector (7), in such a way that a generator (4) and a detector (7) are disposed in mutually facing relationship when at rest, and in such a way that the detector (7) delivers a signal which is proportional to the torque as a result of the relative angular offset of the generator (4) in relation to the associated detector (7), these receiving seats (11) being of a shape such that they allow the rotational adjustment, about an initial axis substantially perpendicular to the first and second support surfaces respectively, of the corresponding detector (7) prior to its being immobilised in the seat (11) by locking means, **characterised in that** the magnetic field detector (7), whose end which is oriented towards the associated generator (4) is provided with a sensitive element (19) which is arranged in a manner eccentric with respect to the first axis, the adjustment which is permitted by rotational movement of the detector (7) thus allowing a tangential adjustment of the sensitive element (19).

2. Mechanical assembly according to claim 1, **characterised in that** said sensor element (9) also supports a circuit for supplying and processing the signal.

3. Mechanical assembly according to any one of Claims 1 to 2, **characterised in that** said locking means are constituted by gluing the sensor elements (9) after adjustment of the position of the sensitive elements (19) on the support (23).

4. Mechanical assembly according to any one of claims 1 to 3, **characterised in that** said magnetic field generators (4) are constituted by abutting two parallelepiped magnets having induction vectors respectively with opposite directions.

5. Mechanical assembly according to any one of claims 1 to 4, **characterised in that** said receiving seats (11) are formed by cylindrical seats adapted for receiving a sensor element (9) constituted by a contact block, said contact block (9) having a body (15) adapted for freely revolving in the inside of the cylindrical seat (11) and comprising a detecting means (7), the sensitive element (19) of which is eccentric with respect to the centre of the cylindrical seat (11).

6. Mechanical assembly according to claim 5, **characterised in that** said contact blocks (9) comprise a stop (16) limiting the axial displacement of said contact blocks (9) inside the cylindrical seats (11).

7. Mechanical assembly according to any one of claims 1 to 6, **characterised in that** the first (3a) and second (23) support surfaces are coaxial circular surfaces, the two magnetic field generators (4) being arranged on the first support surface (3a), on either side of the axis common to those two support surfaces.

FIG 1

EP 1 029 226 B1

FIG 2

FIG 3

FIG 4

FIG 5